Europäisches Patentamt

European Patent Office

Office européen des brevets

(11) Veröffentlichungsnummer: **0 279 271 B1**

## (12) EUROPÄISCHE PATENTSCHRIFT

(45) Veröffentlichungstag der Patentschrift: **18.03.92**

(21) Anmeldenummer: **88101437.7**

(22) Anmeldetag: **02.02.88**

(51) Int. Cl.5: **F16D 35/00**

(54) **Flüssigkeitsreibungskupplung.**

(30) Priorität: **19.02.87 DE 3705210**

(43) Veröffentlichungstag der Anmeldung:
**24.08.88 Patentblatt 88/34**

(45) Bekanntmachung des Hinweises auf die
Patenterteilung:
**18.03.92 Patentblatt 92/12**

(84) Benannte Vertragsstaaten:
**DE ES FR GB IT SE**

(56) Entgegenhaltungen:
**EP-A- 0 014 072      DE-B- 1 450 113
DE-C- 3 041 829      US-A- 4 064 980
US-A- 4 086 988      US-A- 4 086 990**

(73) Patentinhaber: **Behr GmbH & Co.
Mauserstrasse 3
W-7000 Stuttgart 30(DE)**

(72) Erfinder: **Nagl, Willi
Rosenstrasse 7
W-7141 Oberstenfeld(DE)**

(74) Vertreter: **Wilhelm, Hans-Herbert, Dr.-Ing. et al
Wilhelm & Dauster Patentanwälte Hospitalstrasse 8
W-7000 Stuttgart 1(DE)**

**Beschreibung**

Die Erfindung betrifft eine Flüssigkeitsreibungskupplung nach dem Oberbegriff des Patentanspruches 1.

Eine solche Flüssigkeitsreibungskupplung ist bekannt (DE-C-14 50 113). Bei diesen Bauarten wird ebenso wie bei anderen, mit zwei Arbeitskammern versehenen Bauarten (US-A-4 064 980), die am Umfang der Arbeitskammer abgeführte Kupplungsflüssigkeit über einen radial verlaufenden Rückführkanal wieder der Vorratskammer zugeführt. Kupplungen der eingangs genannten Art weisen den Nachteil auf, daß sie nur eine sogenannte schwarz/Weiß-Regelung ermöglichen, d.h. daß sie beim Erreichen einer bestimmten Temperatur schlagartig einschalten und die Drehzahl abrupt erhöhen und umgekehrt, beim Erreichen der entsprechend niedrigeren Temperatur ebenso abrupt wieder abschalten und schlagartig auf die niedrigere Drehzahl zurückgehen. Dieses Regelverhalten ist unerwünscht. Es führt auch zu einer Geräuschentwicklung beim Schalten der Flüssigkeitsreibungskupplung, die insbesondere im Personenkraftwagenbau unerwünscht ist.

Es ist bei Flüssigkeitsreibungskupplungen auch bekannt (DE-C-30 41 829), im äußeren Umfangsbereich von als Primärscheiben dienenden Topfscheiben eine umlaufende Nut in der Nähe der Trennwand anzuordnen, in der sich das aufgrund der gewindeartigen Rillen am Umfang der Topfscheibe ansammelnde Kupplungsöl staut. Dieses Kupplungsöl wird über einen Staukörper zur Vorratskammer zurückgefördert, der sich axial über den Bereich der Trennwand hinaus bis in den Bereich der vor der Arbeitskammer liegenden Vorratskammer erstreckt und der eine Rücklaufbohrung zur Vorratskammer besitzt. Bei Topfscheiben hat sich ein solcher Rücklauf als Zweckmäßig erwiesen. Allerdings kann durch eine solche Ausgestaltung das vorher erwähnte schwarz/weiß-Regelverhalten nicht beseitigt werden.

Der Erfindung liegt die Aufgabe zugrunde, bei einer Flüssigkeitsreibungskupplung der eingangs genannten Art für ein besseres Regelverhalten zu sorgen.

Zur Lösung dieser Aufgabe werden bei einer gattungsgemäßen Flüssigkeitsreibungskupplung die kennzeichnenden Merkmale des Patentanspruches 1 vorgesehen. Es hat sich gezeigt, daß durch zusätzliche Anordnung der Bypassbohrung im äußeren Umfangsbereich der Kupplungsscheibe und durch die nach wie vor beibehaltene Anordnung einer - mit oder ohne Staukörper ausgerüsteten -Rücklaufbohrung in der Trennwand das gewünschte weiche Regelverhalten erzielt werden kann. Eine erfindungsgemäß ausgerüstete Flüssigkeitsreibungskupplung bewirkt eine stetige Zu- und Abschaltung von Flüssigkeitsreibungskupplungen der gattungsgemäßen Art. Dies dürfte auf das durch die Bypassbohrung zusätzlich mit umlaufende Kupplungsöl und auf die dadurch größere Gesamtumlaufmenge zurückzuführen sein. Durch die erfindungsgemäße Ausgestaltung wird beim temperaturbedingten Einschalten der Kupplung das Öl nicht schlagartig zu- oder abgeführt, sondern stets auch über den Bypass umgewälzt. Der Bypass verzögert daher das Abpumpen und es wird erreicht, daß sich das Kupplungsöl mehr auf den Außenbereich der Kupplung verlegen kann, weil eine größere Rückflußmenge umgewälzt wird. Es hat sich außerdem gezeigt, daß die neue Kupplung nur noch eine kleine Schalthysterese aufweist. Sie kann daher bei bestimmten Temperaturen auch zuverlässiger Ein- und Abschalten.

Vorteilhafte Weiterbildungen der Erfindung sind in den Unteransprüchen gekennzeichnet. Die Merkmale der Ansprüche 3 und 4 weisen dabei den Vorteil auf, daß die Bypassbohrung verhältnismäßig einfach hergestellt und, durch entsprechendes Abstimmen der Schlitzbreite der Spannhülse, in sehr einfacher Weise bezüglich der durch den Bypass fließenden Flüssigkeitsmenge an die übrigen Kupplungscharakteristiken angepaßt werden kann. Die Merkmale des Anspruches 5 weisen den Vorteil einer ebenfalls relativ einfachen Herstellung auf, wobei auch hier der Rückflußquerschnitt der Bypassrinne - oder mehrerer auf dem Umfang verteilter Rinnen - an die Kupplungscharakteristik anpaßbar ist.

Die Merkmale der Ansprüche 6 bis 8 bewirken, daß die Kupplungsflüssigkeit in stärkerem Maß auch durch den Bypass zurückgefördert wird, so daß, wenn der Bypass von einer Seite der Kupplungsscheibe, die normale Flüssigkeitsrückführung von der anderen Seite der Kupplungsscheibe erfolgt, auch eine gleichmäßige Umströmung der Kupplungsscheibe erzielt werden kann. Dies führt zu einer zuverlässigen Arbeitsweise der Kupplung.

Die Kupplung ist anhand von Ausführungsbeispielen in der Zeichnung dargestellt und wird im folgenden erläutert. Es zeigen:

Fig. 1    einen schematischen Teilschnitt durch den äußeren Umfangsbereich einer erfindungsgemäßen ausgestalteten Flüssigkeitsreibungskupplung,

Fig. 2    die Ansicht des Gehäuses der Flüssigkeitsreibungskupplung der Fig. 1 in Richtung des Pfeiles II, jedoch ohne Gehäusedeckel, Trennwand und Kupplungsscheibe,

Fig. 3    einen Schnitt ähnlich Fig. 1, jedoch bei einer anderen Ausführungsform,

Fig. 4    die Ansicht des Gehäuses der Fig. 3, ähnlich der Ansicht in Fig. 2, jedoch in Richtung des Pfeiles IV in Fig. 3,

Fig. 5    einen Teilschnitt ähnlich Fig. 1, jedoch bei einer weiteren Ausführungsform,

Fig. 6    die Ansicht auf das Gehäuse der Fig. 5 in Richtung des Pfeiles VI, wobei ebenfalls Gehäusedeckel und Kupplungsscheibe weggelassen sind,

Fig. 7    einen Teilschnitt ähnlich Fig. 1 in einer zusätzlichen Ausführungsform,

Fig. 8    wieder die Ansicht des Gehäuses der Fig. 7 in Richtung des Pfeiles VIII bei weggelassenem Gehäusedeckel und entfernter Kupplungsscheibe,

Fig. 9    die Charakteristik einer Flüssigkeitsreibungskupplung nach dem Stand der Technik beim Ein- und Ausschalten und

Fig. 10   die Charakteristik einer erfindungsgemäßen Kupplung ebenfalls beim Ein- und Ausschalten.

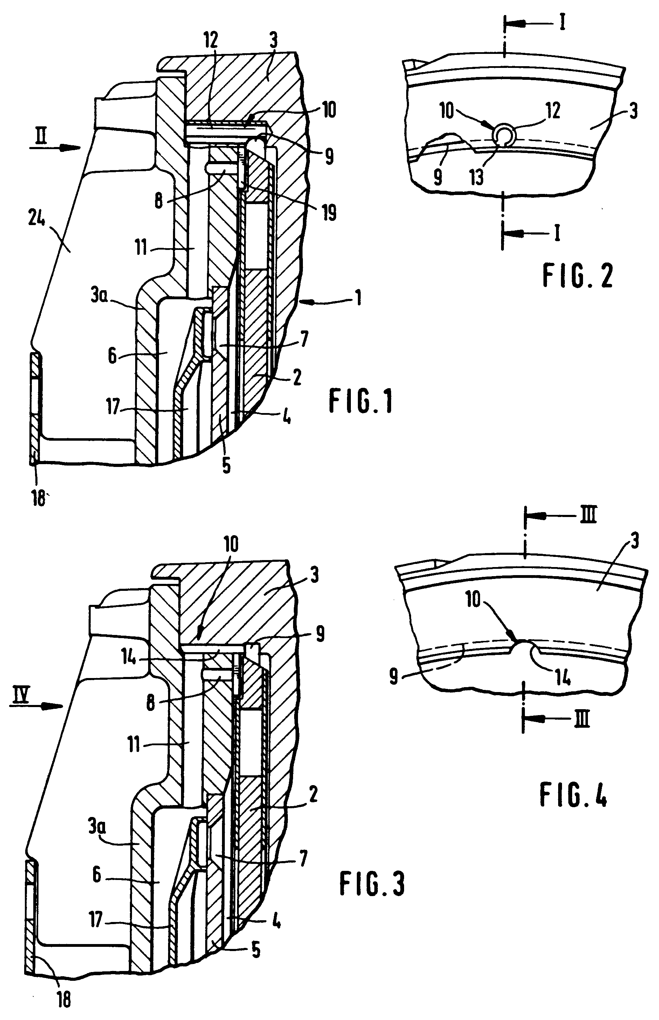

In den Fig. 1 und 2 ist ein Kupplungsgehäuse für eine Flüssigkeitsreibungskupplunggezeigt, das aus einem Unterteil (3) und einem Deckel (3a) besteht, die miteinander in nicht näher dargestellter Weise verschraubt sind. Zwischen Deckel (3a) und dem Gehäuseunterteil (3) wird eine Arbeitskammer (4) gebildet, in der eine Kupplungsscheibe (2) aufgenommen ist, die - in nicht näher dargestellter Weise - mit einer angetriebenen Welle fest verbunden ist. Die Kupplungsscheibe (2) wird eng von der Arbeitskammer (4) umgeben, so daß in bekannter Weise eine Kupplungsflüssigkeit, beispielsweise Silikonöl, bei einer Relativdrehung zwischen der Kupplungsscheibe (2) und dem Gehäuse (3) dazu verwendet werden kann, über die von der Kupplungsflüssigkeit ausgeübten Reibungswirkung das Gehäuse (3) mitzunehmen. Die Kupplungsflüssigkeit befindet sich in der Ausgangsstellung in einer Vorratskammer (6), die im Deckel (3a) gebildet ist. Von der Vorratskammer (6) führt eine Zuflußöffnung (7) in die Arbeitskammer (4). Die Zuflußöffnung (7) wird durch einen Ventilhebel (17) freigegeben oder verschlossen, dessen Stellung von einem Bimetallstreifen (18) über einen nicht dargestellten Stellstift bestimmt wird. Die Ausgestaltung ist dabei so getroffen, daß der Ventilhebel (17) aus der dargestellten Stellung, wo er die Öffnung (7) verschließt, beim Erreichen einer bestimmten Temperatur die Öffnung (7) freigibt und wieder verschließt, wenn die niedrigere Temperatur erreicht ist. Es wird durch eine solche Kupplung erreicht, daß beispielsweise ein mit der Kupplung in Verbindung stehender Lüfter, der einem Kühler für einen Kraftfahrzeugmotor vorgeschaltet ist, bei zu hohen Luft- oder Kühlwassertemperaturen zugeschaltet wird, während er, beispielsweise während der Fahrt, wo genügend Kühlluft den Kühler durchströmt, abgeschaltet bleiben kann. Der Kupplungsdeckel (3a) ist schließlich noch mit etwa radial verlaufenden Rippen (24) versehen, die beim Betrieb eine gewisse Kühlung des Kupplungsgehäuses bewirken sollen.

Der Rückfluß des in die Arbeitskammer (4) eintretenden und aufgrund der Zentrifugalwirkung nach außen getriebenen Kupplungsöles erfolgt über die Rückflußöffnung (8) in einer Trennwand (5) bzw. beim Ausführungsbeispiel in dem an die Trennwand (5) angrenzenden äußeren Teil des Deckels (3a). Von der Rücklauföffnung (8) gelangt das Kupplungsöl zu einem Rückführkanal (11), der in die Vorratskammer (6) mündet. Eine Rückströmung des Kupplungsöles während des Betriebes wird nur dann möglich, wenn ein gewisses Druckgefälle zwischen dem äußeren Bereich der Arbeitskammer (4) und der Vorratskammer (6) vorherrscht. Dies wird durch die Pumpwirkung der sich relativ zum Gehäuse (3) drehenden Kupplungsscheibe (2) und, beim Ausführungsbeispiel zusätzlich dadurch erreicht, daß im äußeren Bereich der Kupplungsscheibe (2) auf der zur Trennwand (5) hin liegenden Seite ein Staukörper (19) vorgesehen ist, der an sich bekannt ist und der dafür sorgt, daß das rotierende Kupplungsöl sich vor der Öffnung (8) anstaut und so zurückgefördert wird.

Bei der erfindungsgemäßen Kupplung ist zusätzlich im Bereich radial außerhalb der Kupplungsscheibe (2) eine umlaufende Nut (9) im Gehäuse (3) vorgesehen, die über eine axial verlaufende Bypassbohrung (10) mit der Vorratskammer (6) bzw. mit dem Rücklaufkanal (11) in Verbindung gebracht wird. Dies geschieht beim Ausführungsbeispiel dadurch, daß in das Gehäuseteil (3) eine Sackbohrung mit verhältnismäßig großem, jedenfalls größerem Durchmesser als es der Tiefe der Nut (9) entspricht, eingebracht wird, in die eine Spannhülse (12) eingesetzt ist, deren axial verlaufender Schlitz (13) so gelegt wird, daß er sowohl zur Arbeitskammer (4) als auch zum Rücklaufkanal (11) hin offen ist. Der Rücklaufkanal (11) wird zu diesem Zweck im Deckelteil (3a) radial bis nach außen durchgeführt, was ohnehin aus herstellungstechnischen Gründen vorteilhaft ist. Durch entsprechende Anordnung der Lage des Schlitzes (13) und/oder durch Wahl der Art der Spannhülse, kann der Strömungsquerschnitt zwischen Arbeitskammer (4) und Rücklaufkanal (11) bestimmt werden. Dadurch kann der Rücklaufquerschnitt in der Bypassbohrung (10) auf die Kupplung, insbesondere auch auf das gewünschte Drehmoment der Kupplung, abgestimmt werden. Durch diese Bypassbohrung (10) wird somit eine zusätzliche Verbindung für den Rücklauf von der Arbeitskammer (4) zur Vorratskammer (6) geschaffen, die dafür sorgt, daß die Rücklaufmenge größer ist. Da die Bypassbohrung (10) auch noch in den Bereich reicht, der in der Nähe der Seite der Kupplungsscheibe (2) liegt, die von der Trennwand (5) abgewandt ist, wird, zusammen mit der Abschrägung des äußeren Umfanges der Kupplungsscheibe (2), in vorteilhafter Weise auch erreicht, daß das rückfließende Kupplungsöl nicht nur einer Seite der Kupplungsscheibe (2) entnommen wird, sondern beiden Seiten. Dadurch stellt sich eine sehr gleichmäßige Umströmung der rotierenden Kupplungsscheibe (2) im Betrieb ein. Die Wirkungsweise der Kupplung wird dadurch vergleichmäßigt.

Wie ohne weiteres deutlich wird, sammelt sich das Kupplungsöl im Betrieb nicht nur vor dem Staukörper (19), sondern auch in der radial außerhalb der Arbeitskammer (4) liegenden Nut (9). Von dort kann es aufgrund des hier entstehenden Überdruckes durch die Bypassbohrung (10) zur Vorratskammer zurückströmen.

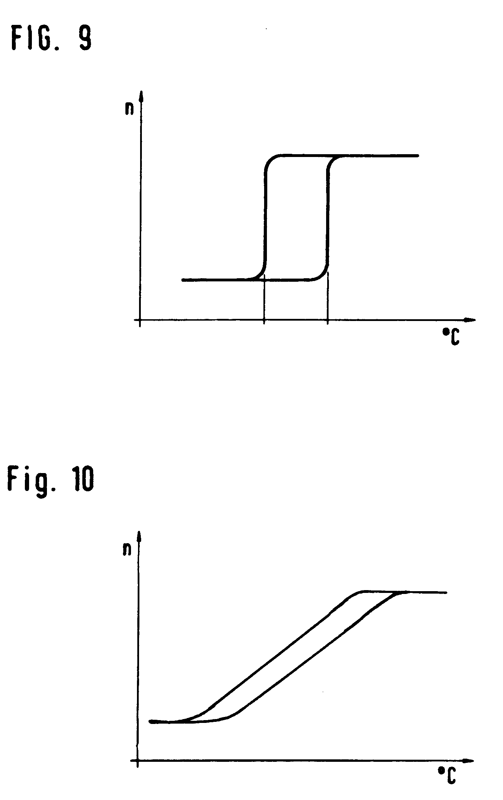

Die Fig. 9 und 10 zeigen die Auswirkung dieser Ausgestaltung. Während Fig. 9 das Schaltverhalten einer Kupplung nach dem Stand der Technik, d.h. nach dem Oberbegriff des Patentanspruches 1 zeigt, zeigt Fig. 10 das Schaltverhalten einer erfindungsgemäßen Kupplung. Es wird deutlich, daß die Drehzahl (n) bei einer Kupplung nach dem Stand der Technik verhältnismäßig schlagartig bei einer bestimmten Temperatur erhöht und ebenso bei einer bestimmten weiteren Temperatur schlagartig wieder abgesenkt wird. Bei der erfindungsgemäßen Kupplung dagegen verläuft der Schaltvorgang stetig. Die durch die Zuführöffnung (7) freigegebene Zuführmenge wird in größerem Maß wieder zurückgeführt, so daß erst bei größerer Öffnung der Zuführöffnung (7) die Drehzahlen immer mehr und mehr erhöht werden. Dadurch ergibt sich ein stetiges Zuschalten, das für eine weiche Arbeitsweise der gesamten Kupplung sorgt. Unangenehme Schlaggeräusche beim Schalten der Kupplung treten nicht auf. Auch die Leistung des mit der Kupplung verbundenen Lüfters wird an den Luftbedarf stetiger angepaßt. Ein weiterer Vorteil besteht darin, daß die erfindungsgemäße Kupplung jede Zwischendrehzahl konstant hält. Das bedeutet, daß nur die Luftmenge gefördert wird, die zur Kühlung (auch im Teillastbereich) erforderlich ist. Dadurch ergeben sich geringe Wassertemperaturschwankungen.

Die Fig. 3 und 4 zeigen eine abgewandelte Ausführungsform insofern, als hier die umlaufende Nut (9) über eine Bypassbohrung (10) mit dem Rücklaufkanal (11) in Verbindung steht, die als eine zur Arbeitskammer (4) und Vorratskammer (6) hin offene Rinne (14) mit einem halbrunden Querschnitt ausgebildet ist. Diese Rinne (14) fluchtet in ihrem radial äußersten Bereich mit ihrem Grund mit dem Boden der Nut (9). Sie läßt sich in relativ einfacher Weise axial am Umfang des Gehäuseteiles (3) durch Fräsen o.dgl. anbringen. Nach dem Einsetzen des Deckels (3a) wird sie im Bereich der Trennwand (5) und der Rückführöffnung (8) verschlossen, bleibt jedoch sowohl zur Nut (9) als auch zum Rücklaufkanal (11) hin offen. Der Querschnitt dieser Rinne (14) läßt sich ebenfalls in seiner Größe mit den übrigen Kupplungsabmessungen abstimmen.

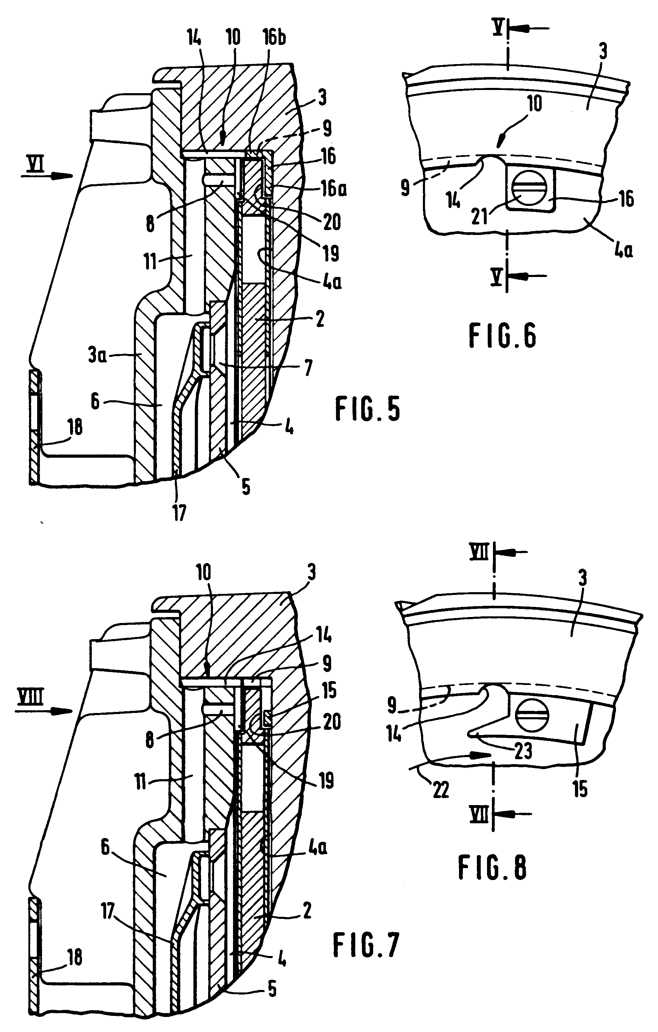

Die Fig. 5 und 6 zeigen eine Variante, bei der der offenen Rinne (14) im Bereich der umlaufenden Nut (9) ein Staukörper (16) vorgeschaltet ist, der, ebenso wie der Staukörper (19) in einem Bereich angeordnet ist, in dem die Kupplungsscheibe (2) im äußersten Bereich ihrer Stirnseiten mit einem umlaufenden Absatz (20) versehen ist. Der Staukörper (16) besteht bei der dargestellten Ausführungsform aus einem kleinen Winkelstück (16), das mit einer Senkschraube (21) am Gehäuseteil (3) befestigt ist. Das Winkelstück (16) besitzt zwei unter 90° zueinander verlaufende Schenkel (16a, 16b), von denen der Schenkel (16a) im Bereich der erwähnten Ausdrehung (20) der Kupplungsscheibe (2) verläuft und flach an der äußeren Seitenwand (4a) der Arbeitskammer (4) des Gehäuseteiles (3) anliegt. Der Schenkel (16b) ragt in die Nut (9) herein. Die Nut (9) kann entweder ebenfalls bis zur Wand (4a) durchgezogen sein, oder wie im Ausführungsbeispiel, nicht bis zu dieser Wand (4a) reichen. In diesem Fall muß das Winkelstück (16) mit seinem Schenkel (16a) in eine gesonderte Ausnehmung der Nut (9) eingesetzt werden. Der Schenkel (16b) ragt dann in die Nut (9) herein.

Diese Ausgestaltung weist den Vorteil auf, daß auch von der Rückseite der Kupplungsscheibe (2), d.h. von der Seite, die der Wand (4a) zugewandt ist, das mitlaufende Kupplungsöl im äußeren Bereich aufgestaut und in die Bypassbohrung (10) zurückgefördert wird. Dadurch wird das von der Kupplungsscheibe (2) mitgerissene Kupplungsöl auf beiden Seiten der Kupplungsscheibe (2) zur Vorratskammer zurückgefördert, so daß auf beiden Seiten eine erwünschte ausreichende Umströmung der Kupplungsscheibe (2) und damit eine Benetzung der an den Reibungsspalten anliegenden Fläche erfolgt. Das Kupplungsöl wird sowohl vom Staukörper (19) in die Rücklaufbohrung (8) als auch vom Staukörper (16) in die Bypassbohrung (10) zurückgefördert. Die gesamte umlaufende Menge wird erhöht. Eine gleichmäßige Wirkungsweise ist dadurch gewährleistet.

Die Fig. 7 und 8 zeigen schließlich eine Ausführungsform, bei der ebenfalls auf beiden Seiten der Kupplungsscheibe (2) Kupplungsöl nach außen abgepumpt wird. In diesem Fall ist jedoch ein Staukörper (15) mit einer gegen die Drehrichtung (22) nach unten vorragenden Nase (23) vorgesehen, der an sich bei anderen Kupplungsbauarten bekannt ist. Die vorspringende Nase (23), die wieder in die Ausdrehung (20) der Kupplungsscheibe (2) hereingreift, sorgt für eine besonders gute Aufstau- und Abpumpwirkung für das Kupplungsöl.

Die Nut kann in diesem Fall bis zur Rückwand (4a) der Arbeitskammer (4) durchgehend ausgebildet werden. Sie kann aber auch, wie gezeigt, nicht bis zu dieser Wand durchgehen, so daß dann jedoch die Rinne (14) bis zu dieser Rückwand (4a) durchgehend ausgebildet sein muß.

Bei allen Ausführungsformen ergibt sich qualitativ gesehen der in der Fig. 10 dargestellte Verlauf der Drehzahlen in Abhängigkeit von der Temperatur, wobei der Verlauf der Hysterese durch Abstimmung des Querschnittes der Bypassbohrung (10) und/oder durch Wahl von Staukörpern verschiedene Ausbildung beeinflußbar ist, ohne daß an den übrigen Maßen der Kupplung etwas verändert wird. Die Erfindung erlaubt es daher auch in verhältnismäßig einfacher Weise, bereits bestehende Kupplungen umzurüsten, wenn dies gewünscht sein sollte.

**Patentansprüche**

1. Flüssigkeitsreibungskupplung (1) mit einer als Primärteil dienenden, fest mit einer angetriebenen Welle verbundenen Kupplungsscheibe (2) und einem als Sekundärteil dienenden Gehäuse (3), das eine die Kupplungsscheibe eng umgebende Arbeitskammer (4) und eine von dieser durch eine Trennwand (5) abgeteilte Vorratskammer (6) für die Kupplungsflüssigkeit aufweist, wobei in der Trennwand eine bimetallgesteuerte Zuflußöffnung (7) für die Kupplungsflüssigkeit zur Arbeitskammer und im Bereich des äußeren Umfanges der Arbeitskammer eine Rückflußöffnung (8) mit einem radial verlaufenden Rückführkanal (11) in die Vorratskammer vorgesehen sind, dadurch gekennzeichnet, daß am Umfang der Arbeitskammer (4) im Bereich radial außerhalb der Kupplungsscheibe (2) und radial außerhalb der Rückflußöffnung (8) eine umlaufende Nut (9) im Gehäuse (3) vorgesehen ist, die über eine von dieser ausgehende, axial verlaufende Bypassbohrung (10) mit der Vorratskammer (6) über eine im wesentlichen radial verlaufende Rückführung direkt in Verbindung steht.

2. Flüssigkeitsreibungskupplung nach Anspruch 1, dadurch gekennzeichnet, daß die Bypassbohrung (10) in den von der Rückflußöffnung (8) zur Vorratskammer (6) verlaufenden Rückführkanal (11) mündet.

3. Flüssigkeitsreibungskupplung nach den Ansprüchen 1 und 2, dadurch gekennzeichnet, daß die Bypassbohrung (10) als eine Bohrung mit einem Durchmesser ausgebildet ist, der größer als die Tiefe der Nut (9) ist, und daß in diese Bohrung eine Spannhülse (12) eingesetzt ist, deren axial verlaufende Schlitz (13) dem Rückführkanal (11) und der Arbeitskammer (4) zugewandt ist.

4. Flüssigkeitsreibungskupplung nach Anspruch 3, dadurch gekennzeichnet, daß die Breite des Schlitzes (13) und die Nut (9) auf das Drehmoment der Kupplung abgestimmt sind.

5. Flüssigkeitsreibungskupplung nach den Ansprüchen 1 und 2, dadurch gekennzeichnet, daß die Bypassbohrung (10) als eine sich vom Boden der Nut (9) aus erstreckende, zur Arbeitskammer (4) und zum Rückführkanal (11) offene Rinne (14) im Gehäuse (2) ausgebildet ist.

6. Flüssigkeitsreibungskupplung nach einem der Ansprüche 1 bis 5, dadurch gekennzeichnet, daß der Bypassbohrung (10) ein auf der von der Trennwand (5) abgewandten Seite der Kupplungsscheibe (2) liegender Staukörper (15, 16) zugeordnet ist.

7. Flüssigkeitsreibungskupplung nach Anspruch 6, dadurch gekennzeichnet, daß der Staukörper (15, 16) in die radiale Nut (9) hereinragt.

8. Flüssigkeitsreibungskupplung nach den Ansprüchen 6 und 7, dadurch gekennzeichnet, daß der Staukörper ein Winkelstück (16) ist, dessen einer Schenkel (16a) parallel zu einer Seite der Kupplungsscheibe (2) verläuft und dessen zweiter Schenkel (16b) mindestens teilweise in die Nut (9) hereinragt.

**Claims**

1. A fluid friction coupling (1) with a coupling disc (2) acting as a primary part, rigidly connected with a driven shaft, and a housing (3) acting as a secondary part, which has a working chamber (4) closely surrounding the clutch disc, and a supply chamber (6), separated from the latter by a separating wall (5), for the clutch fluid, there being provided in the separating wall a bimetal-controlled inlet opening (7) for the clutch fluid to the working chamber, and in the region of the outer periphery of the working chamber a return flow opening (8) with a return flow channel (11) radially extending into the supply chamber, characterized in that, on the periphery of the working chamber (4) in the region radially outside the clutch disc (2) and radially outside the return flow opening (8), a peripheral groove (9) is provided in the housing (3) communicating by means of a bypass hole (10), starting from it and axially extending, with the supply chamber (6) via a substantially radially extending return duct, and in direct communication.

2. A fluid friction coupling according to claim 1, characterized in that the by-pass hole (10) opens out into the return flow channel (11) running from the return flow opening (8) to the supply chamber (6).

3. A fluid friction coupling according to claims 1 and 2, characterized in that the by-pass hole (10) is designed as a hole with a diameter greater than the depth of the groove (9), and in that a clamping sleeve (12) is inserted into this hole, its axially extending slit (13) facing the return flow channel (11) and the working chamber (4).

4. A fluid friction coupling according to claim 3, characterized in that the width of the slit (13) and the groove (9) are adapted to the torque of the clutch.

5. A fluid friction coupling according to claims 1 and 2, characterized in that the bypass hole (10) is designed as a groove (14) in the housing (2) extending from the bottom of the groove (9) open facing the working chamber (4) and the return flow channel (11).

6. A fluid friction coupling according to one of claims 1 to 5, characterized in that the by-pass hole (10) has, associated with it, a baffle (15. 16) situated on the side of the clutch disc (2) facing away from the separating wall (5).

7. A fluid friction coupling according to claim 6, characterized in that the baffle (15, 16) engages into the radial groove (9).

8. A fluid friction coupling according to claims 6 and 7, characterized in that the baffle is an angled piece (16), one arm (16a) of which extends parallel with one side of the clutch disc (2), and the other arm (16b) of which engages at least partly into the groove (9).

**Revendications**

1. Accouplement (1) à frottement de fluide comportant un disque d'accouplement (2) servant de partie primaire et solidarisé avec un arbre entrainé, et un carter (3) qui sert de partie secondaire et qui présente une chambre de travail (4) entourant étroitement le disque d'accouplement et une chambre de stockage (6), séparée de la précédente par une cloison (5), pour le liquide d'accouplement, étant précisé que dans la cloison est prévue une ouverture d'amenée (7), commandée par une lame bimétallique, pour le liquide d'accouplement en direction de la chambre de travail et que dans la zone de la périphérie extérieure de la chambre de travail est prévue, dans la chambre de stockage, une ouverture de retour (8) avec un canal de retour (11) orienté radialement, accouplement caractérisé par le fait qu'à la périphérie de la chambre de travail (4), dans la zone située radialement à l'extérieur du disque d'accouplement (2) et radialement à l'extérieur de l'ouverture de retour (8), est prévue dans le carter (3) une rainure périphérique (9) qui est en liaison directe avec la chambre de stockage (6) par l'intermédiaire d'un perçage de bypass, qui part de cette rainure et qui est orienté axialement, et d'un passage de retour orienté sensiblement radialement.

2. Accouplement à frottement de fluide selon la revendication 1, caractérisé par le fait que le perçage de bypass (10) débouche dans le canal de retour (11) qui va de l'ouverture de retour (8) à la chambre de stockage (6).

3. Accouplement à frottement de fluide selon les revendications 1 et 2, caractérisé par le fait que le perçage de bypass (10) est conçu sous forme de perçage d'un diamètre supérieur à la profondeur de la rainure (9) et par le fait que dans ce perçage est insérée une douille fendue (12) dont la fente (13), dirigée axialement, est orientée vers le canal de retour (11) et la chambre de travail (4).

4. Accouplement à fottement de fluide selon la revendication 3, caractérisé par le fait que la largeur de la fente (13) et la rainure (9) sont adaptées au moment de rotation de l'accouplement.

5. Accouplement à frottement de fluide selon la revendication 1 et 2, caractérisé par la fait que le perçage du bypass (10) est conçu sous forme d'une rigole (14), dans le carter (2), s'étendant depuis le fond de la rainure (9) et ouverte en direction de la chambre de travail (4) et du canal de retour (11).

6. Accouplement à frottement de fluide selon l'une des revendications 1 à 5, caractérisé par le fait qu'au perçage de bypass (10) correspond un obstacle (15, 16) situé du côté du disque d'accouplement (2) opposé à la cloison (5).

**7.** Accouplement à frottement de fluide selon la revendication 6, caractérisé par le fait que l'obstacle (15, 16) pénètre dans la rainure radiale (9).

**8.** Accouplement à frottement de fluide selon les revendications 6 et 7, caractérisé par le fait que l'obstacle est une pièce en équerre (16) dont la première branche (16a) est orientée parallèlement à une face du disque d'accouplement (2), et dont la deuxième branche (16b) pénètre au moins partiellement dans la rainure (9).

FIG.1

FIG. 2

FIG.3

FIG.4

FIG.5

FIG.6

FIG.7

FIG.8

FIG. 9

Fig. 10